# EUROPÄISCHE PATENTSCHRIFT

(11) **EP 0 584 490 B1**
(45) Veröffentlichungstag und Bekanntmachung des Hinweises auf die Patenterteilung: **26.08.1998**
(21) Anmeldenummer: 93110412.9
(22) Anmeldetag: 30.06.1993
(51) Int. Cl.: H01M 2/12, H01M 2/04

(54) **Deckel für Bleiakkumulator mit Entgasungssystem**
Lid assembly for lead accumulator with venting system
Couvercle pour accumulateur au plomb comportant un système de purge des gaz

(30) Priorität: 24.07.1992 DE 9209987 U
(43) Veröffentlichungstag der Anmeldung: 02.03.1994
(73) Patentinhaber: Accumulatorenwerke Hoppecke Carl Zoellner & Sohn GmbH & Co. KG, D-59914 Brilon (DE)
(72) Erfinder: Hampe, Werner, D-3538 Marsberg 12 (DE); Scholz, Peter, D-5790 Brilon 2 (DE)
(74) Vertreter: Stenger, Watzke & Ring Patentanwälte

(56) Entgegenhaltungen:
- EP-A- 0 462 403
- EP-A- 0 523 273
- DE-U- 8 007 719
- DE-U- 9 102 838
- DE-U- 9 209 987
- FR-A- 2 472 274
- US-A- 4 348 466
- US-A- 4 851 305
- PATENT ABSTRACTS OF JAPAN vol. 009, no. 220 (E-341)6. September 1985 & JP-A-60 081 762 (MATSUSHITA DENKI SANGYO KK) 9. Mai 1985

## Beschreibung

Die Erfindung betrifft einen Bleiakkumulator mit einem mehrere Zellen aufweisenden Gehäuse sowie mit einem das Gehäuse abschließenden Deckel, in dem zwischen einem Unterdeckel und einem dazu im Abstand angeordneten Oberdeckel für jede Zelle jeweils eine Kammer mit Umlenkstegen zur Säureabscheidung ausgebildet ist, wobei die Zellen im Deckel jeweils eine mit einem Verschlußstopfen verschließbare sowie von einem eine Entgasungs- und Rücklauföffnung aufweisenden Ringsteg umgebene Füll- und ggf. Kontrollöffnung aufweisen und wobei den Zellen wenigstens ein Zündschutz im Deckel zugeordnet ist.

Ein Bleiakkumulator dieser Art ist aus dem DE-GM 84 30 246 bekannt. Er weist ein Gehäuse aus thermoplastischem Kunststoff auf, in dem mehrere Zellen ausgebildet sind. Oberseitig ist das Gehäuse von einem Deckel abgeschlossen, der als sogenannter Blockdeckel ausgebildet ist, bei dem zwischen einem Unterdeckel und einem dazu im Abstand angeordneten Oberdeckel für jede Zelle jeweils eine Kammer ausgebildet ist. In dieser Kammer sind Umlenkstege zur Säureabscheidung angeordnet. Die Zellen weisen dabei im Deckel jeweils eine Füllöffnung auf, welche gegebenenfalls auch als Kontrollöffnung ausgebildet sein kann. Diese Füll- und Kontrollöffnung ist mit einem Verschlußstopfen verschließbar. Weiterhin ist die Füll- und Kontrollöffnung innerhalb der Kammer von einem Ringsteg umgeben, welcher eine Entgasungs- und Rückführungsöffnung aufweist, wobei dieser Ringsteg zusammen mit den Umlenkstegen das Labyrinth für die Säureabscheidung bildet. Schließlich ist den Zellen im Deckel ein Zündschutz zugeordnet.

Nachteilig bei diesem bekannten Bleiakkumulator ist, daß bei einem Kippen des Gehäuses um 90°, wenn also das Gehäuse auf einer seiner vier Seitenwände steht, je nach Lage und Dauer die Kammern mit Säure vollaufen können, was dazu führen kann, daß die Säure in den Zündschutz und von dort über den Gasungskanal nach außen gelangt. Wenn der Zündschutz aber einmal benetzt ist, dann wird immer ein Austritt von Säure erfolgen. Dies ist im Fahrzeug aus Sicherheitsgründen zu vermeiden, insbesondere wenn der Bleiakkumulator als Starterbatterie in Kraftfahrzeugen verwendet wird.

Die US-A-4348466 offenbart ein Batteriegehäuse, das mit einem Deckel abgeschlossen ist. In dem Deckel sind zwei von je einer Kappe abgedeckte Hohlräume ausgebildet, wobei in jedem Hohlraum drei durch jeweils eine spiralförmige Kammerwand gebildete Kammern angeordnet sind. In jeder Kammer sind ferner zwei Umlenkstege angeordnet. Diese Druckschrift zeigt, insbesondere in Figuren 8 und 9, daß die Kammern mit Säure vollaufen können und die Säure sich in den die Kammern umgebendem Hohlraum ergießen kann. Dies erfolgt beispielsweise bei geringen Erschütterungen. Die diese vorbekannte Lehre weiterbildende DE-U-9102838 beschreibt auch das Problem der mangelnden Kippsicherheit aufgrund der Verwendung von Umlenkstegen infolge von Erschütterungen. Um dieses Problem zu lösen, wird ein aufwendiges System von Kanälen vorgeschlagen, wobei jeder einzelne und von einer Füll- und Kontrollöffnung ausgehende Kanal wenigstens drei Wendepunkte aufweist, um somit labyrinthartig je nach Kipplage einen Elektrolytrückhalt zu gewährleisten. Dies geschieht praktisch hydropneumatisch wie dies auch der Fall in der o. g. US-A-4348466 ist, die allerdings nur einen einzelnen Syphonpunkt kennt.

Davon ausgehend liegt der Erfindung die **Aufgabe** zugrunde, den Bleiakkumulator derat weiterzuentwickeln, daß auch im gekippten Zustand in begrenzter Zeit, z. B. innerhalb von 20 Stunden in Seitenlage und einer Stunde in Kipplage keine Säure in den Zündschutz oder nach außen dringen kann.

Als technische **Lösung** wird mit der Erfindung vorgeschlagen, daß einerseits die Entgasungs- und Rücklauföffnungen der Ringstege und andererseits die Umlenkstege in den Kammern derart angeordnet und aufeinander abgestimmt sind, daß bei sämtlichen Kipplagen des Gehäuses auf seinen vier Seitenwänden der Säurestand unterhalb desjenigen Scheitelpunktes liegt, oberhalb dem die Säure in den Zündschutz fließt.

Ein nach dieser technischen Lehre ausgebildeter Bleiakkumulator hat den Vorteil, daß der Zündschutz vor Säure geschützt ist und ein Austreten von Säure über den Entgasungskanal aus der Batterie in bestimmten Zeiträumen nicht stattfindet. Egal wie das Gehäuse gekippt wird, die Säure wird durch die besondere Anordnung und Ausbildung der Entgasungs- und Rücklauföffnungen sowie der Umlenkstege derart zurückgehalten, daß keine Säure in den Zündschutz fließen kann. Der Scheitelpunkt ist dabei durch die konstruktive Begrenzung des Zündschutzes definiert, beispielsweise durch einen entsprechenden Steg, welcher den Zündschutz umgibt. Die Passage bzw. der Eingang zu der Passage, welche zu dem Zündschutz führt, ist dabei in einer derartigen Höhe vorzusehen, daß diese oberhalb des Säurestandes der jeweiligen Kammer im Doppeldeckel liegt.

Vorzugsweise weist der Ringsteg eine einzige Entgasungs- und Rücklauföffnung auf. Dadurch ist nur eine einzige Möglichkeit geschaffen, daß Säure aus dem Bereich der Füll- und Kontrollöffnung in die Kammer fließen kann. Selbstverständlich ist die Entgasungs- und Rücklauföffnung derart zu dimensionieren, daß die Entgasung und der anschließende Rücklauf der kondensierten Säure ohne weiteres möglich ist.

In einer zweckmäßigen Ausgestaltung der Erfindung ist ferner vorgeschlagen, daß sich der Zündschutz im wesentlichen in der Mitte der Kammer und die Füll- und Kontrollöffnung im Randbereich der Kammer befindet. In der Stellung, bei der sich der Zündschutz oben und die Füll- und Kontrollöffnung unten befindet, ist somit immer gewährleistet, daß keine Säure in den Zündschutz fließen kann.

Gemäß einer anderen Weiterbildung ist vorgeschlagen, daß sich die Entgasungs- und Rücklauföffnung des Ringsteges im Eckbebereich der Kammer befindet. Durch diese Anordnung der Entgasungs- und Rücklauföffnung ist in zwei Kippstellungen gewährleistet, daß sich die Entgasungs- und Rücklauföffnung in einem oberen Eck befindet. Durch eine entsprechende Ausbildung des Ringsteges wird dann die Säure innerhalb des durch den Ringsteg gebildeten Hohlraums zurückgehalten und kann nicht nach unten beispielsweise in Richtung Zündschutz abfließen.

Gemäß einer weiteren zweckmäßigen Ausgestaltung der Erfindung ist die Entgasungs- und Rücklauföffnung des Ringsteges durch dessen freies Ende und die Kammerwand gebildet. Dadurch ist gewährleistet, daß die Entgasungs- und Rücklauföffnung eine Position einnehmen kann, die so weit wie möglich oben ist.

Eine weitere Weiterbildung schlägt vor, daß ein Umlenksteg an derjenigen Kammerwand angeformt ist, an der die Entgasungs- und Rücklauföffnung des Ringsteges angrenzt und dabei derart hin zur gegenüberliegenden Kammerwand gerichtet ist, daß der Umlenksteg mit seinem freien Ende mit dieser eine Passage bildet. Dadurch ist gewährleistet, daß in derjenigen Kipposition des Gehäuses, in der sich die Entgasungs- und Rücklauföffnung in einem unteren Eck befindet, die durch die Entgasungs- und Rücklauföffnung zwangsläufig austretende Säure durch den besonders ausgebildeten Umlenksteg dennoch zurückgehalten wird.

Eine weitere Weiterbildung schlägt vor, daß ein den Zündschutz begrenzender Umlenksteg mit seinem freien Ende eine Passage begrenzt, die im wesentlichen diametral gegenüberliegend zu der Entgasungs- und Rücklauföffnung liegt. Durch diese konstruktive Ausbildung ist gewährleistet, daß in bestimmten Kippositionen der Weg von der Entgasungs- und Rücklauföffnung zu der Passage zum Zündschutz derart weit und ansteigend ist, daß ein Durchtritt der Säure durch die Passage verhindert ist.

In einer weiteren Weiterbildung wird vorgeschlagen, daß die Zellen auf der zu den Füll- und ggf. Kontrollöffnungen gegenüberliegenden Seite durch Zellverbindungsöffnungen miteinander verbunden sind, wobei vorzugsweise die Zellverbindungsöffnungen im Oberdeckel entfernt von der Füll- und Kontrollöffnung nahe dem äußeren Deckelrand ausgebildet sind. Die so ausgebildeten Zellverbindungsöffnungen gewährleisten zum einen eine einwandfreie Entgasung der Zellen, wobei das Gas durch den vorzugsweise am einen Gehäuseende angeordneten Zündschutz hindurchgeleitet wird, andererseits ist gewährleistet, daß in keiner der möglichen Kippositionen Säure von der einen Zelle zur anderen fließen kann.

Schließlich wird in einer Weiterbildung vorgeschlagen, daß in dem durch die Zellverbindungsöffnungen bereitgestellten Entgasungsweg für die strömenden Gase zusätzliche Umlenkungen vorgesehen sind, die den Gasstrom zwingen, auf seinem Weg zum Zündschutz bzw. Entgasungskanal aus der Horizontalbewegung heraus vertikale Mehrfachumlenkungen durchzuführen. Die Folge davon ist, daß zur bisherigen horizontalen Labyrinthwirkung eine vertikale zusätzliche Labyrinthwirkung geschaffen wird, die zu verbesserter Säureabscheidung bzw. Gastrocknung führt.

Ein Ausführungsbeispiel eines erfindungsgemäßen Bleiakkumulators wird nachfolgend anhand der Zeichnungen beschrieben. In diesen zeigt:
- Fig. 1: den Bleiakkumulator in Draufsicht, wobei der Oberdeckel entfernt ist und der Unterdeckel sichtbar ist;
- Fig. 2: den Bleiakkumulator auf die Rückseite gekippt;
- Fig. 3: den Bleiakkumulator auf die Stirnseite des Minus-Pols gekippt;
- Fig. 4: den Bleiakkumulator auf die Stirnseite mit dem Plus-Pol gekippt;
- Fig. 5: einen Schnitt im vergrößerten Maßstab im Bereich der Füll- und Kontrollöffnung, nachdem der Bleiakkumulator auf den Kopf gestellt worden ist;
- Fig. 6: den Bleiakkumulator auf die Vorderseite gekippt;
- Fig. 7: eine Innenansicht des Verschlußdeckels;
- Fig. 8: einen Vertikalschnitt entsprechend den Ausschnitten A-A in Fig. 1 und Fig. 7 durch den kompletten Doppeldeckel;
- Fig. 9: einen Vertikalschnitt entsprechend den Ausschnitten B-B in Fig. 1 und Fig. 7 durch den kompletten Doppeldeckel.

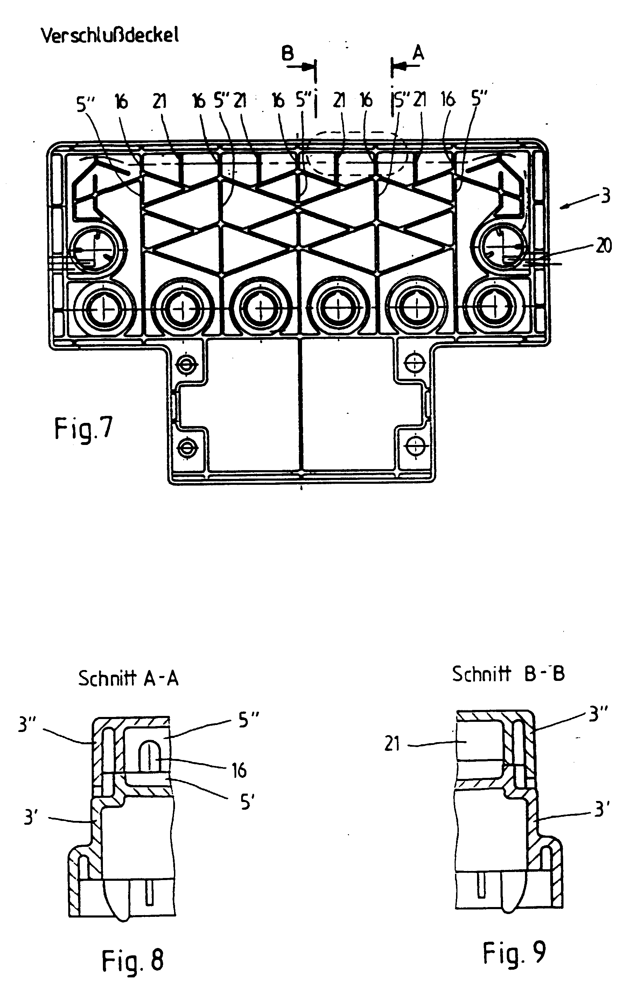

Der Bleiakkumulator besteht aus einem Gehäuse 1 aus thermoplastischem Kunststoff. In diesem Gehäuse 1 sind insgesamt sechs Zellen 2 in einer Einzelreihe angeordnet. Das oben offene Gehäuse 1 ist durch einen Deckel 3 ebenfalls aus thermoplastischem Kunststoff abgeschlossen. Dieser Deckel 3 setzt sich dabei zusammen aus einem Unterdeckel 3' und einem Oberdeckel 3'' in Form eines kappenartigen Verschlußdeckels, der in Fig. 7 im einzelnen dargestellt ist. Der Oberdeckel 3'' ist dabei mit dem Unterdeckel 3' verschweißt, der hinwiederum mit dem Gehäuse 1 ebenfalls dicht verschweißt ist.

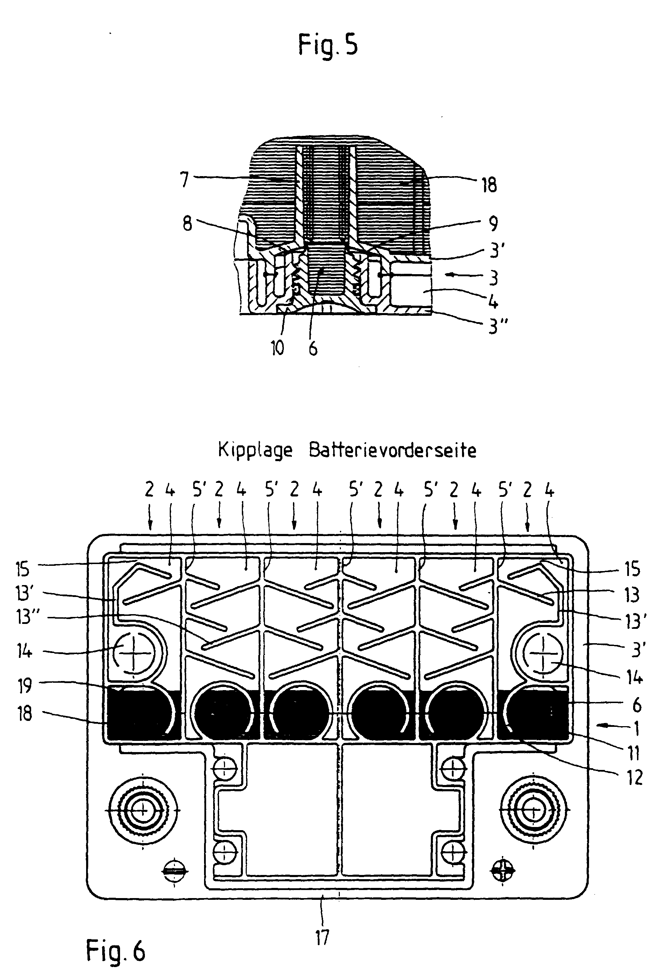

Korrespondierend zu den insgesamt sechs Zellen 2 sind in dem Deckel 3 sechs Kammern 4 ausgebildet, welche durch Kammerwände 5' und 5'' begrenzt sind. Diese Kammerwände 5' und 5'' sind durch entsprechende Stege im Unterdeckel 3' sowie im Oberdeckel 3'' gebildet, wie beispielsweise auch vom Grundprinzip her Fig. 5 erkennen läßt. In den Kammerwänden 5" des Oberdeckels sind Langlöcher 16 ausgespart, die die Ableitung des Säurenebels ermöglichen. Im Unterdeckel 3' ist im Bereich jeder Zelle 2 eine Füll- und Kontrollöffnung 6 trichterförmig ausgebildet, wobei jeweils ein ins Innere der Kammer 4 gerichteter Rohrstutzen 7 angeformt ist. Dieser Rohrstutzen 7 kann dabei auch durch Weglassen auf die alleinige Öffnung 6 im Unterdeckel 3' reduziert sein. Wie in Fig. 5 erkennbar ist, liegt der Oberdeckel 3'' mit einer umlaufenden Dichtlippe 8 im Bereich der Füll- und Kontrollöffnung 6 dichtend auf dem Unterdeckel 3' auf, wobei jedoch diese Dichtlippe 8 um den Umfang verteilt Öffnungen 9 aufweist. Die Füll- und Kontrollöffnung 6 des Deckels 3 ist mittels eines Verschlußstopfens 10 verschlossen.

Die Füll- und Kontrollöffnung 6 ist jeweils von einem Ringsteg 11 umgeben, der mit seinem freien Ende zusammen mit der Kammerwand 5' eine Entgasungs- und Rücklauföffnung 12 definiert. Weiterhin sind in den Kammern 4 spezielle Umlenkstege 13 angeordnet, welche einerseits ein Labyrinth für die Säureabscheidung bilden und andererseits ein Säurerückhaltesystem definieren.

An den beiden Enden des Deckels 3 ist jeweils ein Zündschutz 14 angeordnet, welcher von einem besonders ausgebildeten Umlenksteg 13' begrenzt wird. Dieser Umlenksteg 13' bildet mit seinem freien Ende zusammen mit der Kammerwand 5' eine Passage 15.

Schließlich sind die Kammerwände 5'' einander benachbarter Kammern 4 mit Zellverbindungsöffnungen in Form der oben erwähnten Langlöcher 16 ausgestattet, wie die Fig. 7 und 8 erkennen lassen.

Die Besonderheit des auf diese Weise konstruktiv ausgebildeten Bleiakkumulators soll nachfolgend anhand der verschiedenen Kipplagen erläutert werden:

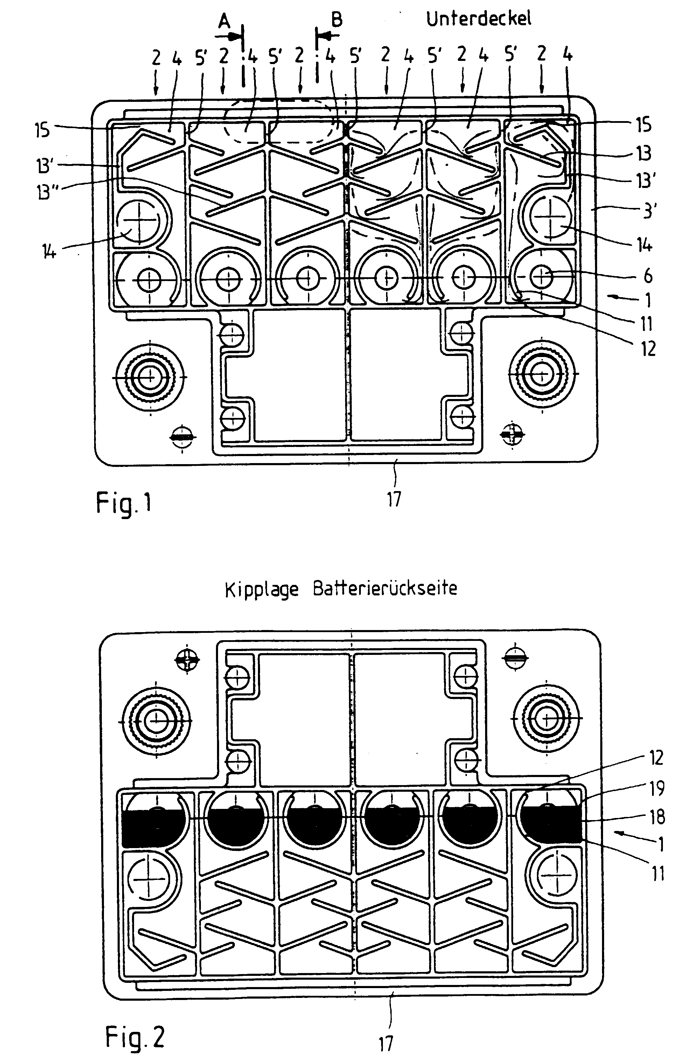

In Fig. 1 ist dargestellt, daß der Bleiakkumulator auf die Vorderseite gekippt worden ist, d.h. daß das Gehäuse 1 auf seiner vorderen Seitenwand aufliegt. Mittels der waagerechten Schraffur ist die Säure 18 angedeutet, welche durch das Kippen des Gehäuses von den jeweiligen Füll- und Kontrollöffnungen 6 über die Öffnungen 9 in den Dichtlippen 8 in die Kammern 4 fließt. Der obere Säurestand 19 ist dabei angedeutet. Es ist aber erkennbar, daß sich der durch den Ringsteg 11 abgegrenzte Raum nahezu vollständig mit der Säure 18 füllt. Der Säurestand 19 ist dabei niedriger als die Höhe des Zündschutzes 14, so daß keine Gefahr besteht, daß Säure 18 in den Zündschutz 14 bzw. Entgasungskanal 20 ein- und von dort nach außen dringt.

In Fig. 2 ist die Kippstellung des Bleiakkumulators auf der rückseitigen Seitenwand 17 des Gehäuses 1 dargestellt. In dieser Kipposition befindet sich die Füll- und Kontrollöffnung 6 oberhalb des Zündschutzes 14, so daß rein theoretisch Säure 18 aus den Füll- und Kontrollöffnungen 6 in den darunter befindlichen Zündschutz 14 fließen könnte. Durch die besondere Ausbildung der Ringstege 11 und dabei insbesondere durch die Anordnung der Entgasungs- und Rücklauföffnungen 12 im oberen Randbereich sammelt sich die Säure 18 innerhalb der Ringstege 11 bis zu der angegebenen Höhe und wird von einem Abfließen nach unten eine begrenzte Zeit lang zurückgehalten.

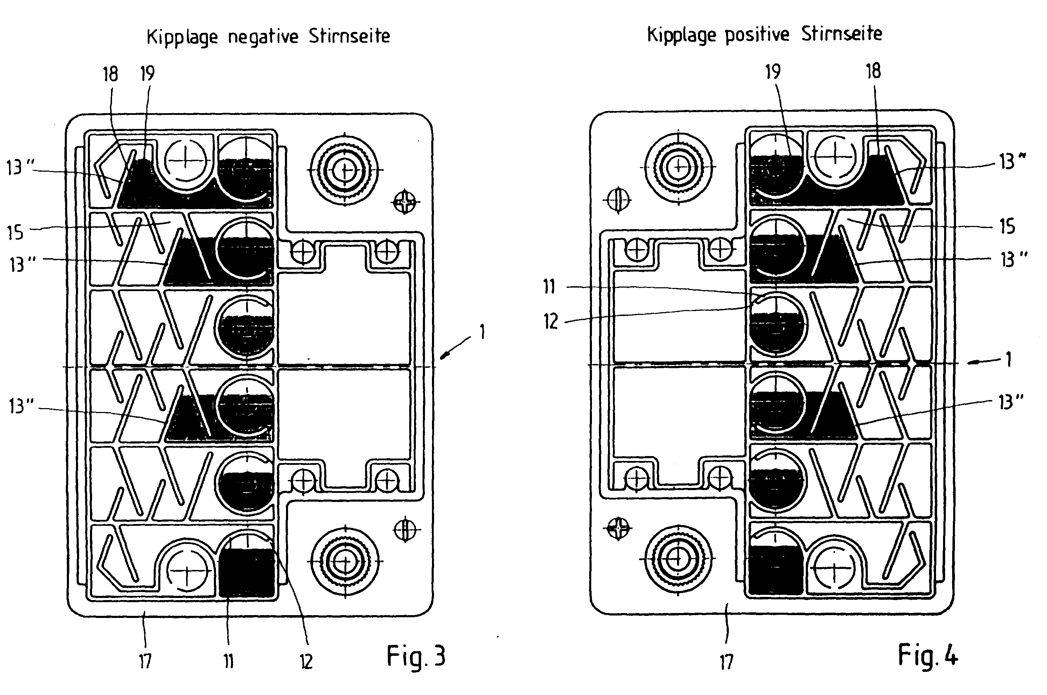

In Fig. 3 ist das Gehäuse auf die Stirnseite des Minus-Pols gekippt. Dort, wo bei den Ringstegen 11 sich die Entgasungsund Rücklauföffnungen 12 in der rechten oberen Ecke der jeweiligen Kammern 4 befinden, wird die Säure 18 innerhalb der Ringstege 11 zurückgehalten. Dort, wo aber sich die Entgasungs- und Rücklauföffnungen 12 in der rechten unteren Ecke befinden, kann die Säure 18 abfließen und rein theoretisch durch die Zellverbindungsöffnungen 16 hin zum unteren Zündschutz 14 fließen. Dies wird aber durch speziell ausgerichtete Umlenkstege 13'' verhindert. Diese gehen von der Kammerwand 5 aus, an der sich auch die Entgasungs- und Rücklauföffnung 12 befindet und erstreckt sich nach oben, so daß die so ausgebildeten Umlenkstege 13'' eine Sperre für die Säure 18 bilden. Eine ähnliche Situation ist in der umgekehrten Kipplage in Fig. 4 dargestellt, wenn das Gehäuse 1 auf der Stirnseite mit dem Plus-Pol aufliegt. Auch dort verhindern Umlenkstege 13'' ein Nachuntenfließen der Säure 18 dort, wo sich die Entgasungs- und Rücklauföffnung 12 in der linken unteren Ecke befindet.

Insgesamt ist somit festzustellen, daß in sämtlichen beschriebenen Kippositionen keine Säure 18 in den Zündschutz 14 und somit in den Entgasungskanal 20 nach außen fließen kann. Der Zündschutz 14 wird somit keinesfalls mit Säure 18 benetzt und er wird ein Austreten der Säure 18 beispielsweise in den Motorraum eines Fahrzeugs über eine begrenzte Zeit zuverlässig verhindern. Die Zeitdauer von beispielsweise 20 Stunden in Seitenlage und 1 Stunde in Kipplage bis zum Säureaustritt ist abhängig vom geometrischen und konstruktiven Design des Batteriedeckels, insbesondere von der Zahl der vorgesehenen inneren horizontalen und vertikalen Labyrinthumlenkungen, Aufbau des Ringsteges und Zahl bzw. Größe des Zündschutzes 14 und seines Materials. Diese Kippsicherheit ist insbesondere beim Roboterhandling und Autotransport erforderlich.

Die konstruktiven Einzelheiten, wie sie in den Zeichnungen dargestellt, jedoch nicht beschrieben sind, stellen für sich jeweils erfindungswesentliche Merkmale dar.

### Bezugszeichenliste

- 1: Gehäuse
- 2: Zelle
- 3: Deckel
- 3': Unterdeckel
- 3": Oberdeckel
- 4: Kammer
- 5': Kammerwand im Unterdeckel
- 5": Kammerwand im Oberdeckel mit Langloch
- 6: Füll- und Kontrollöffnung
- 7: Rohrstutzen
- 8: Dichtlippe
- 9: Öffnung
- 10: Verschlußstopfen
- 11: Ringsteg
- 12: Entgasungs- und Rücklauföffnung
- 13: Umlenksteg
- 13': Umlenksteg
- 13'': Umlenksteg
- 14: Zündschutz
- 15: Passage
- 16: Zellverbindungsöffnung
- 17: Seitenwand
- 18: Säure
- 19: Säurestand
- 20: Entgasungskanal
- 21: Vertikalumlenkungen (Prallwände) Ableitung des Säurenebels

## Patentansprüche

1. Bleiakkumulator
mit einem mehrere Zellen (2) aufweisenden Gehäuse (1) sowie mit einem das Gehäuse (1) abschließenden Deckel (3), in dem zwischen einem Unterdeckel (3') und einem dazu im Abstand angeordneten Oberdeckel (3") für jede Zelle (2) jeweils eine Kammer mit Umlenkstegen (13,13',13'') zur Säureabscheidung ausgebildet ist,
wobei die Zellen (2) im Deckel (3) jeweils eine mit einem Verschlußstopfen (10) verschließbare sowie von einem eine Entgasungs- und Rücklauföffnung (12) aufweisenden Ringsteg (11) umgebene Füll- und ggf. Kontrollöffnung (6) aufweisen und
wobei den Zellen (2) wenigstens ein Zündschutz (14) im Deckel (3) zugeordnet ist,
**dadurch gekennzeichnet,**
daß einerseits die Entgasungs- und Rücklauföffnungen (12) der Ringstege (11) und andererseits die Umlenkstege (13,13',13'') in den Kammern (4) derart angeordnet und aufeinander abgestimmt sind, daß bei sämtlichen Kipplagen des Gehäuses (1) auf seinen vier Seitenwänden (17) der Säurestand (19) unterhalb desjenigen Scheitelpunktes liegt, oberhalb dem die Säure (18) in den Zündschutz (14) fließt.

2. Bleiakkumulator nach Anspruch 1, dadurch gekennzeichnet, daß der Ringsteg (11) eine einzige Entgasungs- und Rücklauföffnung (12) auf dem höchsten Punkt bei Kipplage "Batterierückseite" aufweist.

3. Bleiakkumulator nach Anspruch 1 oder 2, dadurch gekennzeichnet, daß sich der Zündschutz (14) im wesentlichen in der Mitte der Kammer (4) und die Füll- und Kontrollöffnung (6) im Randbereich der Kammer (4) befindet.

4. Bleiakkumulator nach Anspruch 2 oder 3, dadurch gekennzeichnet, daß sich die Entgasungs- und Rücklauföffnung (12) des Ringsteges (11) im Bereich der Kammer (4) befindet.

5. Bleiakkumulator nach Anspruch 3 oder 4, dadurch gekennzeichnet, daß die Entgasungs- und Rücklauföffnung (12) des Ringsteges (11) durch dessen freies Ende und die Kammerwand (5',5'') gebildet ist.

6. Bleiakkumulator nach Anspruch 4 oder 5, dadurch gekennzeichnet, daß ein Umlenksteg (13'') an derjenigen Kammerwand (5',5'') angeformt ist, an der die Entgasungs- und Rücklauföffnung (12) des Ringsteges (11) angrenzt und dabei derart hin zur gegenüberliegenden Kammerwand (5) gerichtet ist, daß der Umlenksteg (13'') mit seinem freien Ende mit dieser eine Passage (15) bildet.

7. Bleiakkumulator nach einem der Ansprüche 3 bis 6, dadurch gekennzeichnet, daß ein den Zündschutz (14) begrenzender Umlenksteg (13') mit seinem freien Ende eine Passage (15) begrenzt, die im wesentlichen diametral gegenüberliegend zu der Entgasungs- und Rücklauföffnung (12) liegt.

8. Bleiakkumulator nach einem der Ansprüche 2 bis 7, dadurch gekennzeichnet, daß die Zellen (2) auf der zu der Füll- und ggf. Kontrollöffnung (6) gegenüberliegenden Seite durch Zellverbindungsöffnungen (16) miteinander verbunden sind.

9. Bleiakkumulator nach Anspruch 8, dadurch gekennzeichnet, daß die Zellverbindungsöffnungen (16) im Oberdeckel (3'') entfernt von der Füll- und Kontrollöffnung (6) nahe dem äußeren Deckelrand ausgebildet sind.

10. Bleiakkumulator nach einem der Ansprüche 1 bis 9, dadurch gekennzeichnet, daß in dem durch die Zellverbindungsöffnungen (16) bereitgestellten Entgasungsweg für die strömenden Gase zusätzliche Umlenkungen (21) vorgesehen sind, die den Gasstrom zwingen, auf seinem Weg zum Zündschutz (14) bzw. Entgasungskanal (20) aus der Horizontalbewegung heraus vertikale Mehrfachumlenkungen durchzuführen.

11. Bleiakkumulator nach Anspruch 10, dadurch gekennzeichnet, daß die Umlenkungen (21) als im Oberdeckel (3'') ausgebildete vertikale Prallwände ausgestaltet sind und daß die Zellverbindungsöffnungen (16) Aussparungen in den Kammerwänden (5) sind.

## Claims

1. Lead-acid accumulator
with a housing (1) having a plurality of cells (2) and with a cover (3) which closes the housing (1), in which a chamber with deflection webs (13, 13', 13") for acid deposition is in each case formed between a lower cover (3') and an upper cover (3"), arranged at a distance from said lower cover (3'), for each cell (2), the cells (2) in the cover (3) each having a filling and, possibly, monitoring opening (6) which can be closed by a closure plug (10) and is surrounded by an annular web (11) having a venting and reverse-flow opening (12), and at least one ignition protection device (14) in the cover (3) being allocated to the cells (2),
characterized
in that the venting and reverse-flow openings (12) in the annular webs (11), on the one hand, and the deflection webs (13, 13', 13") in the chambers (4), on the other hand, are arranged and are matched to one another in such a way that, in any tilted position of the housing (1) on its four side walls (17), the acid level (19) is below that highest point above which the acid (18) flows into the ignition protection device (14).

2. Lead-acid accumulator according to Claim 1, characterized in that the annular web (11) has a single venting and reverse-flow opening (12) at the highest point in the "battery rear side" tilted position.

3. Lead-acid accumulator according to Claim 1 or 2, characterized in that the ignition protection device (14) is located substantially in the centre of the chamber (4), and the filling and monitoring opening (6) is located in the edge region of the chamber (4).

4. Lead-acid accumulator according to Claim 2 or 3, characterized in that the venting and reverse-flow opening (12) in the annular web (11) is located in the region of the chamber (4).

5. Lead-acid accumulator according to Claim 3 or 4, characterized in that the venting and reverse-flow opening (12) in the annular web (11) is formed by the free end of the latter and the chamber wall (5', 5").

6. Lead-acid accumulator as claimed in Claim 4 or 5, characterized in that a deflection web (13") is integrally formed on that chamber wall (5', 5") to which the venting and reverse-flow opening (12) in the annular web (11) is adjacent, and is at the same time directed towards the opposite chamber wall (5) in such a manner that the free end of the deflection web (13") forms a passage (15) with this opposite chamber wall (5).

7. Lead-acid accumulator according to one of Claims 3 to 6, characterized in that the free end of a deflection web (13') which bounds the ignition protection device (14) bounds a passage (15) which is located substantially diametrically opposite the venting and reverse-flow opening (12).

8. Lead-acid accumulator according to one of Claims 2 to 7, characterized in that the cells (2) on the side opposite the filling and, possibly, monitoring opening (6) are connected to one another through cell connecting openings (16).

9. Lead-acid accumulator according to Claim 8, characterized in that the cell connecting openings (16) in the upper cover (3") are formed at a distance from the filling and monitoring opening (6), close to the outer cover edge.

10. Lead-acid accumulator according to one of Claims 1 to 9, characterized in that additional deflection devices (21) for the flowing gases are provided in the vent path provided by the cell connecting openings (16) and force the gas flow to carry out a plurality of vertical deflections from the horizontal movement direction on its path to the ignition protection device (14) or vent channel (20).

11. Lead-acid accumulator according to Claim 10, characterized in that the deflection devices (21) are designed as vertical baffle walls formed in the upper cover (3"), and in that the cell connecting openings (16) are cutouts in the chamber walls (5).

## Revendications

1. Accumulateur au plomb, comportant un bac (1) présentant plusieurs éléments (2), ainsi qu'un couvercle (3) fermant le bac (1) et dans lequel est chaque fois formé, pour chaque élément (2), entre une partie inférieure de couvercle (3') et une partie supérieure de couvercle (3''), située à distance de la première, un compartiment à barrettes déflectrices (13, 13', 13'') pour la séparation de l'acide,
dans lequel les éléments (2) présentent, dans le couvercle (3), chaque fois une ouverture de remplissage et, le cas échéant, de contrôle (6), propre à être obturée par un bouchon de fermeture (10) et entourée par une barrette annulaire (11) présentant une ouverture de dégagement de gaz et de retour (12), et
dans lequel au moins une protection d'amorçage (14) est associée aux éléments (2) dans le couvercle (3),
caractérisé en ce que,
d'une part, les ouvertures de dégagement de gaz et de retour (12) des barrettes annulaires (11) et, d'autre part, les barrettes déflectrices (13, 13', 13"), situées dans les compartiments (4), sont disposées et coordonnées de telle manière les unes par rapport aux autres que, lors d'une position renversée du bac (1) sur ses quatre parois latérales (17), le niveau d'acide (19) demeure au-dessous du point maximal, au-dessus duquel l'acide (18) s'écoule dans la protection d'amorçage (14).

2. Accumulateur au plomb selon la revendication 1, caractérisé en ce que la barrette annulaire (11) présente une seule ouverture de dégagement de gaz et de retour (12) sur le point le plus haut, dans le cas de la position renversée "derrière de la batterie".

3. Accumulateur au plomb selon la revendication 1 ou 2, caractérisé en ce que la protection d'amorçage (14) est située sensiblement au milieu du compartiment (4) et en ce que l'ouverture de remplissage et de contrôle (6) se trouve dans la zone de bord du compartiment (4).

4. Accumulateur au plomb selon la revendication 2 ou 3, caractérisé en ce que l'ouverture de dégagement de gaz et de retour (12) de la barrette annulaire (11) se trouve dans la zone du compartiment (4).

5. Accumulateur au plomb selon la revendication 3 ou 4, caractérisé en ce que l'ouverture de dégagement de gaz et de retour (12) de la barrette annulaire (11) est formée par l'extrémité libre de cette dernière et par la paroi de compartiment (5', 5'').

6. Accumulateur au plomb selon la revendication 4 ou 5, caractérisé en ce qu'une barrette déflectrice (13'') est formée d'un seul tenant avec la paroi de compartiment (5', 5") à laquelle est adjacente l'ouverture de dégagement de gaz et de retour (12) de la barrette annulaire (11) et, en outre, dirigée de telle manière en direction de la paroi opposée (5) du compartiment que la barrette déflectrice (13'') constitue par son extrémité libre un passage (15) avec cette paroi.

7. Accumulateur au plomb selon l'une des revendications 3 à 6, caractérisé en ce qu'une barrette déflectrice (13') bordant la protection d'amorçage (14) délimite, par son extrémité libre, un passage (15) qui est situé sensiblement de manière diamétralement opposée à l'ouverture de dégagement de gaz et de retour (12).

8. Accumulateur au plomb selon l'une des revendications 2 à 7, caractérisé en ce que les éléments (2) sont reliés les uns aux autres par des ouvertures de liaison d'éléments (16), du côté opposé à l'ouverture de remplissage et, le cas échéant, de contrôle (6).

9. Accumulateur au plomb selon la revendication 8, caractérisé en ce que les ouvertures de liaison d'éléments (16) sont formées dans la partie supérieure de couvercle (3'') à distance de l'ouverture de remplissage et de contrôle (6), à proximité du bord extérieur du couvercle.

10. Accumulateur au plomb selon l'une des revendications 1 à 9, caractérisé en ce qu'on prévoit, dans le chemin de dégagement de gaz, constitué du fait des ouvertures de liaison d'éléments (16), des chicanes (21) supplémentaires pour l'écoulement des gaz, qui obligent le flux gazeux à effectuer, sur son trajet vers la protection d'amorçage (14) ou bien vers le passage de dégagement de gaz (20), de multiples déviations verticales à partir du déplacement horizontal.

11. Accumulateur au plomb selon la revendication 10, caractérisé en ce que les chicanes (21) sont réalisées sous la forme de parois verticales de déviation dans la partie supérieure de couvercle (3''), et en ce que les ouvertures de liaison d'éléments (16) sont des évidements dans les parois de compartiment (5).
